# EUROPÄISCHE PATENTANMELDUNG

(11) **EP 3 382 940 A1**
(43) Veröffentlichungstag der Anmeldung: **03.10.2018**
(21) Anmeldenummer: 18159866.5
(22) Anmeldetag: 05.03.2018
(51) Int. Cl.: H04L 12/24, H04L 12/28, H04L 12/40

(54) **SICHERUNG GERÄTE- / PROJEKTSPEZIFISCHER DATEN EINES GEBÄUDEINSTALLATIONSSYSTEMS AUF EINER EXTERNEN SPEICHEREINHEIT**

(30) Priorität: 09.03.2017 DE 102017003876
(71) Anmelder: Siemens Schweiz AG, 8047 Zürich (CH)
(72) Erfinder: Huber, Hans-Jürgen, 93098 Mintraching (DE); Schönberger, Thomas, 94315 Straubing (DE)
(74) Vertreter: Maier, Daniel Oliver

(57) **Zusammenfassung**

Die Erfindung betrifft ein Gebäudeinstallationssystem (6) zur Gebäudeautomation mit einer Buskomponente (1) und gegebenenfalls einer Steuereinheit (4), die dazu ausgebildet sind, der Buskomponente (1, 3) zugeordnete, projektspezifische Daten zu sichern und wiederherzustellen. Die Buskomponenten (1, 3) und/oder die Steuereinheit (4) können von sich aus eine Datenverbindung (7) zu einer externen Speichereinheit (8) herstellen und dort unter anderem zur Laufzeit veränderte Daten abspeichern. Zudem ist optional vorgesehen, dass von der externen Speichereinheit (8) und/oder der Steuereinheit (4) und/oder den Buskomponenten (1, 3) ein Zeitstempel generiert wird und in den Buskomponenten (1, 3) und/oder in der Steuereinheit (4) und/oder in der externen Speichereinheit (8) hinterlegt wird. Dadurch werden zur Laufzeit geänderte Daten, wie zum Beispiel Szenenwerte, automatisch gesichert. Soll ein früherer Zustand des Gebäudeinstallationssystems (6) wiederhergestellt werden, so genügt ein einfaches Importieren der gewünschten Daten. Ferner ergeben sich weitere Vorteile, wie zum Beispiel eine bessere Dokumentation, Nachvollziehbarkeit der getätigten Änderungen oder eine Benachrichtigung bei ungewollten Änderungen.

## Beschreibung

Die vorliegende Erfindung betrifft ein Gebäudeinstallationssystem zur Gebäudeautomation mit einer oder mehreren Buskomponenten. Darüber hinaus betrifft die vorliegende Erfindung ein Verfahren zum Betreiben eines Gebäudeinstallationssystems.

Gebäudeinstallationssysteme in Häusern oder Gebäudekomplexen ermöglichen es, verschiedene Buskomponenten individuell zu steuern. Die jeweiligen Buskomponenten werden über eine eigens dafür konzipierte Software in Betrieb gesetzt. Im Bereich der Gebäudeinstallationssysteme wird zur Inbetriebnahme eine spezifische Software, zum Beispiel ETS (Engineering Tool Software), eingesetzt.

Nach Auslieferung und Erstinbetriebnahme eines Gebäudeinstallationssystems werden Grundeinstellungen mit der Inbetriebnahmesoftware vorgenommen. Dabei werden in der Regel die jeweiligen Buskomponenten in das Gebäudeinstallationssystem mittels der Software integriert. Das Gebäudeinstallationssystem sieht dabei vor, dass ein Nutzer auch nachträglich Änderungen am Gebäudeinstallationssystem vornehmen kann, wie zum Beispiel die Änderung von Kalibrierwerten oder Szenenwerten. In der Praxis kann es zudem vorkommen, dass eine Buskomponente z.B. wegen eines Defektes ausgetauscht werden muss und das Austauschgerät mittels der Inbetriebnahmesoftware erneut in Betrieb gesetzt werden muss, wobei nachträglich vom Benutzer geänderte Einstellung nicht mehr zur Verfügung stehen.

Aus den Prospekten eines Herstellers für Gebäudeinstallationssysteme ist bekannt, dass über die Software ETS bestimmte Einstellungen des Gebäudeinstallationssystems gesichert werden können. Diese Sicherung beinhaltet im Wesentlichen die Projektierung, d.h. die physikalisch integrierten Buskomponenten, Gruppenzuordnungen und Basiseinstellungen. Zur Laufzeit veränderte Daten, wie zum Beispiel neue Kalibrierwerte oder Szenenwerte, sowie die Zeitpunkte der getätigten Veränderungen werden dabei nicht gesichert.

Dies bedeutet, dass im Falle eines Datenverlustes die Grundstruktur des Gebäudeinstallationssystems wiederherstellbar ist, jedoch nicht die individuell eingestellten Änderungen. Eine Wiederherstellung der projektspezifischen Daten ist über die Software möglich. Dabei muss der Benutzer seine individuell getätigten Einstellungen manuell an den jeweiligen Buskomponenten ausführen. Dies ist eventuell mit erhöhtem Zeit und Kostenaufwand verbunden. Des Weiteren besteht aktuell keine Möglichkeit, den Zeitpunkt der Inbetriebnahme beziehungsweise den Zeitpunkt der letzten Änderung an dem Gebäudeinstallationssystem auszulesen.

Die Aufgabe der vorliegenden Erfindung besteht darin, eine effektive Sicherung der Gerätedaten beziehungsweise projektspezifischen Daten eines Gebäudeinstallationssystems bereitzustellen.

Erfindungsgemäß wird diese Aufgabe durch ein Gebäudeinstallationssystem zur Gebäudeautomation nach Anspruch 1 gelöst. Die Erfindung stellt auch ein Verfahren nach Anspruch 9 zum Betreiben eines Gebäudeinstallationssystems gemäß vorliegender Erfindung bereit. Vorteilhafte Weiterbildungen der Erfindung ergeben sich aus den Unteransprüchen.

Gemäß der vorliegenden Erfindung ist ein Gebäudeinstallationssystem zur Gebäudeautomation mit einer oder mehreren Buskomponenten, die dazu ausgebildet sind, der Buskomponente zugeordnete, projektspezifische Daten und/oder individuell eingestellte Änderungen an eine externe Speichereinheit zu senden und gegebenenfalls von dieser zu empfangen, vorgesehen. Das Gebäudeinstallationssystem zeichnet sich dadurch aus, dass die Daten auf einer externen Speichereinheit von der Buskomponente automatisiert speicherbar sind. Dabei kann eine Datenverbindung zwischen der Buskomponente und der externen Speichereinheit bedarfsweise hergestellt werden. Dies kann dabei entweder direkt von der Buskomponente oder indirekt über eine Steuereinheit erfolgen.

Wird also an der Buskomponente des Gebäudeinstallationssystem eine Änderung durchgeführt, so kann vollständig automatisiert durch die betroffene Buskomponente oder durch eine Steuereinheit eine Sicherung der veränderten Daten auf der externen Speichereinheit erfolgen. Dazu stellt die Buskomponente zum Beispiel eigenständig eine Datenverbindung zu dieser externen Speichereinheit her. Mit anderen Worten kann das Gebäudeinstallationssystem eigenständig bedarfsweise eine Datenverbindung zu der externen Speichereinheit herstellen, um dort veränderte Daten der Buskomponenten zu sichern. Durch diese automatisierte Sicherung wird gewährleistet, dass ein ursprünglich eingestellter Zustand des Gebäudeinstallationssystems auch in Zukunft nach einem Datenverlust wieder herstellbar ist.

Eine Weiterbildung der vorliegenden Erfindung sieht vor, dass die Steuereinheit als digitales Endgerät ausgeführt ist. Ein solches digitales Endgerät kann beispielsweise ein Notebook, ein Desktop-PC, ein Smartphone oder ein Tablet sein. Damit kann die Datensicherung/-wiederherstellung von verschiedenen Endgeräten aus erfolgen. Dabei ist die Position des digitalen Endgeräts, das die Schnittstelle zur externen Speichereinheit herstellt oder initiiert, nicht örtlich fixiert.

Eine zusätzliche Ausführungsform der Erfindung sieht vor, dass die Buskomponente und/oder die Steuereinheit eine Datenschnittstelle zur Herstellung einer Datenverbindung zu der externen Speichereinheit aufweist. Dies ermöglicht eine Sicherung der Daten des Gebäudeinstallationssystems.

In einer besonders vorteilhaften weiteren Ausführungsform dieser Erfindung ist die Datenverbindung zwischen Buskomponente beziehungsweise die Steuereinheit zu der externen Speichereinheit drahtlos ausgeführt. Dies bedeutet, dass zwischen dem Gebäudeinstallationssystem und externer Speichereinheit kein Verbindungskabel bereitgestellt werden muss. Ein eventuell aufwändiges Verlegen eines Datenkabels, beispielsweise eines LAN Kabels, wird damit umgangen. Dies eröffnet hinsichtlich der Positionierung der externen Speichereinheit neue Freiheitsgrade. Die externe Speichereinheit kann beliebig zum Gebäudeinstallationssystem positioniert werden, solange die drahtlose Datenverbindung dies unterstützt. So kann beispielsweise die externe Speichereinheit in einem anderen Stockwerk als die Buskomponente oder die Steuereinheit platziert sein.

Eine besondere Weiterbildung der vorliegenden Erfindung sieht vor, dass die externe Speichereinheit über ein Computernetzwerk erreichbar ist. Dies eröffnet grundsätzlich die Möglichkeit, die externe Speichereinheit beliebig in Relation zur Position des Gebäudeinstallationssystems zu positionieren. Die externe Speichereinheit kann beispielsweise in einer anderen Stadt, sogar auf einem anderen Kontinent platziert sein. Über das Computernetzwerk kann trotz der eventuell großen Distanz zwischen Gebäudeinstallationssystem und externen Speichereinheit eine Datenverbindung hergestellt werden. Damit müssen in einem Gebäude keine Räumlichkeiten für die externe Speichereinheit bereitgehalten werden. Dies eröffnet beispielsweise bei einem Hausbau mehr Freiheitsgrade hinsichtlich der Raumaufteilung. Zudem wird durch die örtliche Trennung von Gebäudeinstallationssystem und externen Speichereinheit das Risiko, die individuell eingestellten Parameter und oder Daten zu verlieren, reduziert. Externe Speichereinheiten, welche über ein Computernetzwerk erreichbar sind, werden oft auch als Cloud-Speicher oder Cloud-Server bezeichnet.

Eine weitere besonders vorteilhafte Weiterbildung dieser vorliegenden Erfindung sieht ein Gebäudeinstallationssystem vor, wobei die Buskomponente und/oder die Steuereinheit dazu ausgelegt sind, dass bei einem Datentransfer ein von der externen Speichereinheit und/oder der Steuereinheit und/oder der Buskomponente generierter Zeitstempel in der Buskomponente und/oder der externen Speichereinheit speicherbar ist. Damit kann festgestellt werden, wann welche Änderungen am Gebäudeinstallationssystem durchgeführt wurden. Dies kann beispielsweise dann hilfreich sein, wenn bei einer Reparatur des Gebäudeinstallationssystems nach der Ursache einer Fehlfunktion gesucht wird. Durch eine Dokumentation der Zeitpunkte, an denen Änderungen am Gebäudeinstallationssystem durchgeführt wurden, kann ein eventuell vorhandener Fehler leichter detektiert werden. Dies kann einem Servicetechniker beispielsweise helfen, eine Fehlerquelle im Gebäudeinstallationssystem rascher festzustellen. Zudem kann ein Nutzer des Gebäudeinstallationssystems im Falle einer ungewollten Änderung, beispielsweise im Falle eines Hackerangriffs, darüber informiert werden.

Die vorliegende Erfindung stellt auch ein Verfahren zum Betreiben eines Gebäudeinstallationssystems einschließlich einer Buskomponente und eventuell einer Steuereinheit zur Gebäudeautomation bereit. Dabei kann speziell im Falle einer Änderung der Daten des Gebäudeinstallationssystems automatisiert eine Datenverbindung von der Buskomponente und/oder Steuereinheit zu der externen Speichereinheit aufgebaut werden. Die geänderten Daten werden auf die externe Speichereinheit übertragen und dort abgespeichert. Da dieses Verfahren automatisiert, das heißt unabhängig vom Nutzer stattfindet, ist sichergestellt, dass jede Änderung auch erfasst und protokolliert wird. Mit diesem Verfahren kann ausgeschlossen werden, dass eine Änderung am Gebäudeinstallationssystem durchgeführt wird und dies nicht erfasst wird.

In einem weiteren optionalen vorteilhaften Verfahrensschritt ist vorgesehen, dass durch die externe Speichereinheit und/oder die Steuereinheit und/oder die Buskomponente ein Zeitstempel generiert wird. Dieser Zeitstempel wird zu der Buskomponente und/oder Steuereinheit und/oder der externen Speichereinheit übertragen und dort in einem internen Speichermodul der Buskomponente und/oder der Steuereinheit abgespeichert und/oder in der externen Speichereinheit abgelegt. Damit werden Änderungen am Gebäudeinstallationssystem besser beziehungsweise zuverlässiger protokolliert. Der Nutzer kann in diesem Fall auch bei einem Ausfall der externen Speichereinheit oder der Buskomponente die Änderungen an der Buskomponente nachvollziehen.

Ein weiteres vorteilhaftes Verfahren der vorliegenden Erfindung sieht eine Wiederherstellung von Daten in der Buskomponente des Gebäudeinstallationssystems vor. Dazu wird eine Datenverbindung von der Buskomponente und/oder der Steuereinheit zu der externen Speichereinheit hergestellt. Es erfolgt eine Identifizierung aktueller Daten der externen Speichereinheit anhand eines Zeitstempels. Diese Daten werden über die Datenverbindung zurückgeladen und in die jeweilige Buskomponente integriert. Damit ist es möglich, den Zustand des Gebäudeinstallationssystems wieder in einen früheren Zustand zu versetzen, ohne die Änderungen manuell vornehmen zu müssen.

Die oben im Zusammenhang mit dem erfindungsgemäßen Gebäudeinstallationssystem genannten Vorteile und Variationsmöglichkeiten gelten auch für die erfindungsgemäßen Verfahrensschritte.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

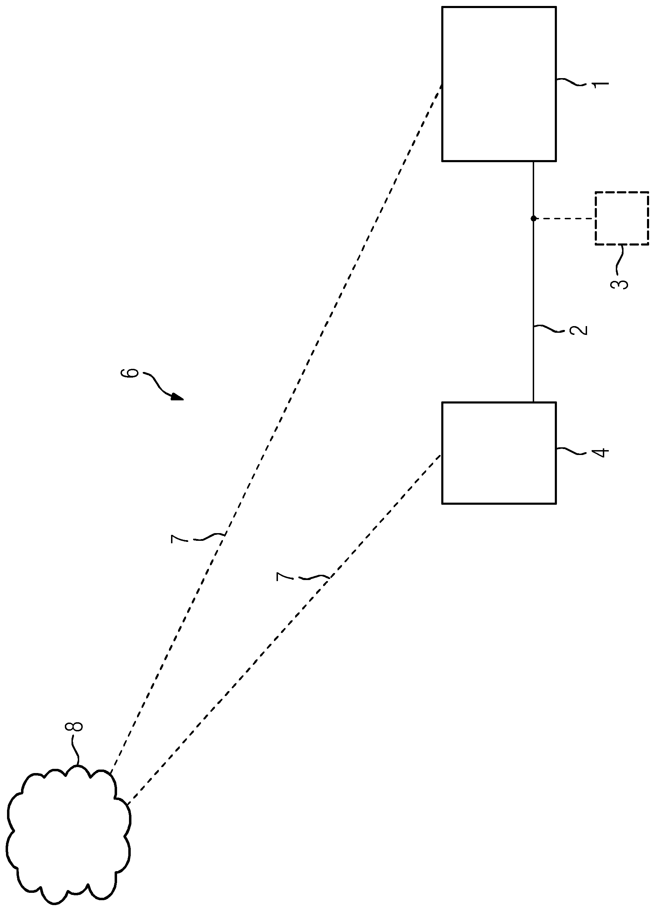

Die vorliegende Erfindung wird nun anhand der beigefügten Zeichnung näher erläutert, die eine schematische Prinzipskizze zeigt. Darin wird eine externe Speichereinheit 8 sowie ein Gebäudeinstallationssystem 6 darstellt, das eine Steuereinheit 4, sowie weitere Buskomponenten 1, 3 aufweist.

Die im Folgenden beschriebenen Ausführungsbeispiele beziehen sich auf Gebäudeinstallationssysteme 6 in Gebäuden, insbesondere in Wohngebäuden. Das Gebäudeinstallationssystem 6 kann jedoch auch in größeren Gebäudekomplexen oder Bürokomplexen eingesetzt werden.

Die Figur zeigt eine schematische Prinzipskizze des Gebäudeinstallationssystems 6, das eine Datenverbindung 7 zu der externen Speichereinheit 8 aufweist. Die Datenverbindung 7 kann von der Steuereinheit 4 und/oder den Buskomponenten 1, 3 hergestellt werden. In einem Gebäudeinstallationssystem 6 können verschiedene Buskomponenten 1, 3 integriert sein. In der Figur ist eine aktive Buskomponente 1 beispielhaft gezeigt, die eine Datenverbindung 7 zu der externen Speichereinheit 8 aufweist. Weitere Buskomponenten 3 sind gestrichelt angedeutet. Diese Buskomponenten 1, 3 sind durch eine Busleitung 2 miteinander verbunden. Die Anzahl der jeweiligen Buskomponenten 1, 3 ist begrenzt, jedoch können mehrere 10.000 Buskomponenten in einem Gebäudeinstallationssystem 6 integriert sein.

Über die Busleitung 2 ist gegebenenfalls die Steuereinheit 4 an das Gebäudeinstallationssystem 6 angeschlossen. Die Steuereinheit 4 kann dabei als digitales Endgerät ausgeführt sein, beispielsweise als Desktop-PC, Notebook, Smartphone oder Tablet.

Im Gebäudeinstallationssystem 6 arbeiten die Buskomponenten 1, 3 üblicherweise dezentral. Sie dienen dazu, verschiedene Funktionen im Gebäude zu realisieren. So können die Buskomponenten 1, 3 beispielsweise die Heizungen individuell steuern, verschiedene Beleuchtungsszenarien einstellen oder Jalousien beziehungsweise Vorhänge steuern. Dabei können den jeweiligen Buskomponenten 1, 3 individuelle Szenenwerte zugeordnet werden. Ein Szenenwert dient zum Beispiel dazu, bestimmte, teils voneinander abhängige Zustände durch bedienbare Schalter oder Tasten reproduzierbar abrufbar zu machen. Szenenwerte können im Einzelnen oder in Kombination Beleuchtung, Heizung, Jalousie, Zutrittskontrolle oder allgemeine Schaltzustände umfassen.

So kann ein Nutzer beispielsweise für ein Wohnzimmer die Szenen "Essen" und "Kaminabend" einstellen. Bei der Szene "Essen" wird beispielsweise die Beleuchtung über dem Esstisch eingeschaltet, die TV-Lampe ausgeschaltet, die Rollos bleiben unverändert. Beim Aufruf der Szene "Kaminabend" wird beispielsweise die Beleuchtung über dem Esstisch ausgeschaltet, die TV-Lampe angeschaltet und die Rollos werden heruntergefahren. Neben diesen beiden beispielhaft genannten Szenen können auch weitere individuelle Szenen eingestellt werden. Der große Vorteil für den Nutzer ist, dass er nur noch eine Taste drücken muss, um eine gewünschte Szene herzustellen. Im Beispiel der Szene "Kaminabend" genügt ein einziger Tastendruck, um die Beleuchtung und die Rollos zugleich zu steuern. Mit einem einzigen Tastendruck ist es möglich, mehrere Buskomponenten 1, 3 gleichzeitig anzusprechen und zu steuern. Somit ermöglicht die Einstellung von Szenenwerten die gezielte Ansteuerung mehrerer Buskomponenten 1, 3.

In der Regel wird ein Nutzer nach Auslieferung und Erstinstallation des Gebäudeinstallationssystems 6 weitere Konfigurationen und Einstellungen vornehmen. Beispielsweise können dies Kalibrierwerte, Einstellung von Schwellwerten, Anzeigetexte in Displays, Helligkeitswerte, Zeitverzögerungswerte oder Szenenwerte sein, die in den Buskomponenten 1, 3 zur Laufzeit persistent gespeichert werden. Dies bedeutet, dass sich nach Inbetriebnahme des Gebäudeinstallationssystems 6 projektspezifische Daten ändern können. Darüber hinaus könnte auch eine neue Firmware in die jeweiligen Buskomponenten 1, 3 eingespielt worden sein.

Im Falle einer Änderung der Daten im Gebäudeinstallationssystem 6 ist es vorteilhaft, wenn der Zeitpunkt dokumentiert beziehungsweise protokolliert wird. Darüber hinaus ist es günstig, die individuell getätigten Einstellungen im Gebäudeinstallationssystem 6 ebenfalls zu sichern. Ein bisher vorhandenes Backupsystem sieht vor, dass gewisse Grundeinstellungen in einer xml-Datei gesichert werden können. Diese Einstellungen enthalten beispielsweise Projektierungsdaten oder Anzahl und Art der einzelnen Buskomponenten. Die vom Nutzer individuell getätigten Einstellungen werden bei diesem Backupsystem explizit nicht gesichert.

Kommt es im Gebäudeinstallationssystem 6 zu einem Datenverlust, beispielsweise durch eine interne Fehlfunktion, durch einen Blitzeinschlag oder einer Fehlbedienung, so wären die individuell getätigten Einstellungen verloren. Zwar könnte sich ein Nutzer diese manuell notiert haben, jedoch müsste er in diesem Fall alle individuell getätigten Einstellungen erneut manuell vornehmen. Er müsste alle Einstellungen einzeln erneut in das Gebäudeinstallationssystem 6 einpflegen, was durchaus langwierig werden kann und als "lästig" empfunden werden kann. Genau in einem solchen Fall zeigt die vorliegende Erfindung ihre vorteilhafte Wirkung.

Gemäß der vorliegenden Erfindung können bei jeder Änderung durch den Nutzer die jeweiligen Daten sowie der dazugehörige Zeitstempel auf der externen Speichereinheit 8 generiert und optional abgespeichert werden. Dies erfolgt völlig selbstständig, ohne dass der Nutzer hierfür eine separate Aktion tätigen muss. Mit anderen Worten ist auf der externen Speichereinheit 8 jede Änderung dokumentiert. Daher kann nun im Falle eines Datenverlustes ein vorhergehender Zustand des Gebäudeinstallationssystems 6 problemlos über die Datenverbindung 7 in die Buskomponenten 1, 3 und/oder die Steuereinheit 4 importiert und dort mühelos eingepflegt werden. Somit entfällt für den Inbetriebnehmer die Bereitstellung und Rücksicherung der Grundeinstellungen mit der Inbetriebnahmesoftware, sowie für den Nutzer das zum Teil lästige manuelle Eingeben der zur Laufzeit geänderten Daten.

Darüber hinaus bietet dieses neue erfindungsgemäße Backupsystem weitere Vorteile. Im Falle eines Defekts am Gebäudeinstallationssystem 6 kann ein Hersteller feststellen, wann eine Buskomponente 1, 3 erstmalig in Betrieb genommen wurde beziehungsweise wann die letzte Änderung an ihr erfolgte. Da die jeweiligen Änderungen auch in der jeweiligen Buskomponente 1, 3 selbst gespeichert sind, kann ein Hersteller diese Änderungen auch bei Rückwaren feststellen. Bei Rückwaren kann diese Information helfen, den Grund einer Fehlfunktion rascher zu entdecken. Somit kann ein besserer Service für den Nutzer bereitgestellt werden. Ferner ist eine lückenlose Dokumentation der Änderungen an den Buskomponenten 1, 3 auch im Hinblick auf Gewährleistungs- und/oder Garantieansprüche vorteilhaft.

Zusätzlich ermöglicht dieses erfindungsgemäße Backupsystem eine Projektdokumentation für den Nutzer des Gebäudeinstallationssystems 6. Ein Nutzer kann beispielsweise früher getätigte individuelle Einstellungen einsehen und diese bei Bedarf wieder aktivieren. Dies kann ihm dabei helfen, sein Gebäudeinstallationssystem 6 optimal nach seinen Wünschen einzustellen.

Das dieser Erfindung zu Grunde liegende Backupsystem ist auch bei ungewollten Änderungen vorteilhaft. Ungewollte Änderungen können beispielsweise durch eine Fehlbedienung des Nutzers oder auch durch einen Hackerangriff entstehen. Durch die Sicherung der jeweiligen Änderungen und deren dazugehörigen Zeitstempel erhält ein Nutzer im Bedarfsfall Informationen über diese ungewollten Änderungen. Er kann in einem solchen Fall zeitnah und situationsgerecht reagieren. Da auf der externen Speichereinheit 8 zusätzlich zur letztmalig getätigten Änderung auch Daten von vorhergehenden Änderungen abgespeichert sein können, kann ein Nutzer einen früheren Zeitpunkt des Gebäudeinstallationssystems 6 auswählen. Dies ist dann besonders hilfreich, wenn mit der letztmaligen Änderung ein Fehler im Gebäudeinstallationssystem 6 entstanden ist und es erforderlich ist, frühere Daten zu importieren.

Besonders bequem ist es, wenn die externe Speichereinheit 8 als Cloud-Server ausgeführt ist. In diesem Fall ist ein Verlust der individuell eingestellten Daten äußerst unwahrscheinlich. Ein Nutzer des Gebäudeinstallationssystems 6 muss zur weiteren Speicherung seiner Daten keine weiteren Geräte anschaffen. Er muss also keine externe Speichereinheit 8 bereitstellen. Die externe Speichereinheit 8 kann somit vollständig ausgelagert werden. Sie kann unabhängig vom Gebäudeinstallationssystem 6 betrieben werden und sogar auf einem anderen Kontinent platziert sein. In diesem Fall wären das Gebäudeinstallationssystem 6 sowie die externe Speichereinheit 8 völlig unabhängig voneinander ausgeführt.

Kommt es zu einem Datenverlust innerhalb des Gebäudeinstallationssystems 6 beispielsweise durch einen Blitzeinschlag oder möchte der Nutzer aus anderen Gründen eine frühere Konfiguration der Buskomponenten 1, 3 wiederherstellen, so bietet die vorliegende Erfindung hierzu eine bessere Lösung an, als alle Einstellungen manuell vorzunehmen. Wählt der Nutzer das Verfahren zur Wiederherstellung der Daten, so wird eine Datenverbindung 7 von der Buskomponente 1 und/oder der Steuereinheit 4 zu der externen Speichereinheit 8 aufgebaut. Anhand der dort hinterlegten Zeitstempel früherer Änderungen der Daten ist es möglich, die aktuellen Daten zu identifizieren. Alternativ können auch, sofern erwünscht, ältere Daten identifiziert werden. Es ist auch möglich, dass der Nutzer eigenständig die Daten auswählt, die zur Wiederherstellung seines Gebäudeinstallationssystems 6 verwendet werden sollen. Diese Daten werden über die Datenverbindung 7 in die jeweiligen Buskomponenten 1, 3 zurückgeladen und dort integriert. Damit erhält der Nutzer die Möglichkeit, frühere Zustände seines Gebäudeinstallationssystems 6 schnell und bequem wiederherzustellen. Bei einer Fehlfunktion oder eine Fehlbedienung kann das Gebäudeinstallationssystem 6 bequem und schnell in frühere Zustände versetzt werden.

Insgesamt lässt sich also feststellen, dass die vorliegende Erfindung die vom Nutzer individuell zur Laufzeit veränderten Daten automatisch sichert und im Falle eines Datenverlustes die getätigten Änderungen in den Buskomponenten 1, 3 und/oder der Steuereinheit 4 sehr bequem wiederhergestellt werden können. Dies erhöht die Funktionalität und den Komfort des Gebäudeinstallationssystems 6 deutlich.

### Bezugszeichenliste

- 1: Buskomponente
- 2: Busleitung
- 3: weitere Buskomponenten
- 4: Steuereinheit
- 6: Gebäudeinstallationssystem
- 7: Datenverbindung
- 8: externe Speichereinheit

## Patentansprüche

1. Gebäudeinstallationssystem (6) zur Gebäudeautomation mit
- einer Buskomponente (1),
**dadurch gekennzeichnet, dass**
- in der Buskomponente (1) hinterlegten Daten auf einer externen Speichereinheit (8) von der Buskomponente (1) und/oder einer Steuereinheit (4) des Gebäudeinstallationssystems (6) speicherbar sind.

2. Gebäudeinstallationssystem (6) nach Anspruch 1, wobei die Speicherung automatisiert durchführbar ist.

3. Gebäudeinstallationssystem (6) nach einem der vorigen Ansprüche, wobei Daten in der Buskomponente (1) und/oder in der Steuereinheit (4) mit den in der externen Speichereinheit (8) gesicherten Daten wiederherstellbar sind.

4. Gebäudeinstallationssystem (6) nach einem der vorigen Ansprüche, wobei die Buskomponente (1) und/oder die Steuereinheit (4) eine Datenschnittstelle zur Herstellung einer Datenverbindung (7) zu der externen Speichereinheit (8) aufweist.

5. Gebäudeinstallationssystem (6) nach Anspruch 4, wobei die Datenverbindung (7) zumindest teilweise drahtlos ist.

6. Gebäudeinstallationssystem (6) nach einem der vorigen Ansprüche, wobei die Steuereinheit (4) als digitales Endgerät ausgeführt ist.

7. Gebäudeinstallationssystem (6) nach einem der vorigen Ansprüche, wobei die externe Speichereinheit (8) von dem Gebäudeinstallationssystem (6) über ein Computernetzwerk erreichbar ist.

8. Gebäudeinstallationssystem (6) nach einem der vorigen Ansprüche, wobei die Buskomponente (1) und/oder die Steuereinheit (4) und/oder die externe Speichereinheit (8) dazu ausgelegt sind, bei einem Datentransfer einen generierten Zeitstempel zu speichern.

9. Verfahren zum Betreiben eines Gebäudeinstallationssystems (6) einschließlich einer Buskomponente (1) zur Gebäudeautomation mit den Schritten:
- Automatisierter Aufbau einer Datenverbindung (7) von der Buskomponente (1) und/oder einer Steuereinheit (4) des Gebäudeinstallationssystems (6) zu einer externen Speichereinheit (8),
- Übertragen und Abspeichern von in der Buskomponente (1) hinterlegten Daten auf die externe Speichereinheit (8) über die Datenverbindung (7).

10. Verfahren gemäß Anspruch 9 mit den folgenden Schritten:
- Generierung eines Zeitstempels durch die externe Speichereinheit (8), die Steuereinheit (4) oder durch die Buskomponente (1)
- Übertragung des Zeitstempels zur Buskomponente (1) und/oder zur externen Speichereinheit (8) und/oder zur Steuereinheit (4)
- Speicherung des Zeitstempels in der Buskomponente (1) und/oder in der Steuereinheit (4) und/oder in der externen Speichereinheit (8).

11. Verfahren zur Wiederherstellung von Daten eines Gebäudeinstallationssystems (6) gemäß einem der Ansprüche 1 bis 8 mit den folgenden Schritten:
- Herstellen einer Datenverbindung (7) von der Buskomponente (1) und/oder der Steuereinheit (4) zu der externen Speichereinheit (8),
- Identifizierung der Daten der externen Speichereinheit (8) anhand eines Zeitstempels,
- Zurückladen der Daten und Integration in die jeweilige Buskomponente (1) über die Datenverbindung (7).
